(19) Europäisches Patentamt / European Patent Office / Office européen des brevets

(11) **EP 1 807 671 B1**

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(21) Anmeldenummer: 06754232.4

(22) Anmeldetag: **08.06.2006**

(51) Int Cl.:
*F27B 3/04* (2006.01)   *C22B 15/00* (2006.01)

(86) Internationale Anmeldenummer:
**PCT/EP2006/005497**

(87) Internationale Veröffentlichungsnummer:
**WO 2006/131372 (14.12.2006 Gazette 2006/50)**

(54) **VERFAHREN UND VORRICHTUNG ZUR GEWINNUNG EINES METALLS AUS EINER DAS METALL ENTHALTENDEN SCHLACKE**

METHOD AND DEVICE FOR EXTRACTING A METAL FROM A SLAG CONTAINING THE METAL

PROCEDE ET DISPOSITIF POUR EXTRAIRE UN METAL D'UN LAITIER CONTENANT CE METAL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.06.2005 DE 102005026589**
**16.05.2006 DE 102006022779**

(43) Veröffentlichungstag der Anmeldung:
**18.07.2007 Patentblatt 2007/29**

(73) Patentinhaber: **SMS Demag AG**
**40237 Düsseldorf (DE)**

(72) Erfinder:
• **KUNZE, Jürgen**
**46509 Xanten (DE)**
• **DEGEL, Rolf**
**40878 Ratingen (DE)**
• **BORGWARDT, Dieter**
**64286 Dorsten (DE)**
• **WARCZOK, Andrzej**
**Etobikoke, Ontario (CA)**
• **RIVEROS URZUA, Gabriel Angel**
**Nunoa, Santiago (CL)**

(74) Vertreter: **Klüppel, Walter et al**
**Patentanwälte Hemmerich & Kollegen**
**Hammerstrasse 2**
**57072 Siegen (DE)**

(56) Entgegenhaltungen:
DE-A1- 2 707 578        US-A- 5 479 433
US-A- 5 765 489

**EP 1 807 671 B1**

## Beschreibung

Die Erfindung betrifft ein Verfahren zur Gewinnung eines Metalls aus einer das Metall enthaltenden Schlacke, bei dem die verflüssigte metallhaltige Schlacke in mindestens einem Lichtbogenofen erhitzt wird. Des weiteren betrifft die Erfindung eine Vorrichtung zur Gewinnung eines Metalls aus einer das Metall enthaltenden Schlacke.

Beim Erschmelzen von Kupferkonzentraten werden Kupferstein und Schlacke erzeugt. Die Schlacke enthält Kupfer sowohl in gelöster Form als auch in Form von mechanisch übergegangenen Steineinschlüssen. Es gibt zwei wesentliche Verfahren zur Reinigung der Schlacke: Die Schlackeflotation nach dem Abschrecken, Zerkleinern und Mahlen und die pyrometallurgische Reduktion der flüssigen Schlacke.

Pyrometallurgische Schlackereinigung wird zumeist in drei Varianten vorgenommen, nämlich:

1) in einem AC-Lichtbogenofen durch Reduktion mit Koks und Elektroden, Schlackevorwärmung und Sedimentation,

2) in horizontalen zylindrischen Drehöfen durch Eindüsung eines Reduktionsmittels, z. B. in einem Teniente-Schlak-kereinigungsofen,

3) in vertikalen Konverter mit Eindüsung eines Reduktionsmittels. z. B. TBRC oder Isasmelt.

Die Schlackereinigung erfordert die Reduktion von Magnetit, um die suspendierten Einschlüsse freizusetzen und ihr Absetzen zu ermöglichen und die Koreduktion von kupferartigem Oxid zuzulassen.

Die am häufigsten eingesetzte Kupferschlackereinigung in AC-Lichtbogenöfen erfordern einen verhältnismäßig großen Ofen wegen der erforderlichen Reduktions- und Sedimentationszeit, welche 3 bis 8 Stunden beträgt. Sie verursacht einen relativ hohen spezifischen Energieverbrauch aufgrund des starken spezifischen Einflusses der Wärmeverluste. Die Schlackereinigung in einem Lichtbogenofen wird als schubweiser oder halbkontinuierlicher Prozess durchgeführt. Die Flexibilität des Lichtbogenofens bei der Temperaturregelung erlaubt eine richtige Schlackevorwärmung. Die Bildung von dispergierten metallischen Kupfereinschlüssen als Produkt der Reduktion von kupferartigem Oxid zusammen mit einem Teil kleiner Kupfersteineinschlüsse begrenzen jedoch die Phasentrennung und ausreichende Kupferrückgewinnung.

Ein Verfahren zur Rückgewinnung von Metallen aus metallhaltigen Schlacken, insbesondere von Eisen-Kupfer-Schlacken in einem Schmelzofen ist aus der US 4,110,107 bekannt. Die geschmolzene Schlacke wird in einen Lichtbogenofen eingebracht, in dem ein Aufschmelzen erfolgt. Eine Kohlenstoff Einspritzeinheit wird eingesetzt, um Kohlenstoff in den Bodenbereich des Schmelzebades einzubringen. Ein Verschlackungsmittel wie beispielsweise CaO wird ebenfalls in das Bad eingebracht. Nach der Reduktion wird das Metall aus dem Ofen entnommen.

Ein ähnliches Verfahren zum Rückgewinnen insbesondere von Nickel und einer Nickel-Kupfer-Mischung aus einer Schlackenschmelze ist aus der US 4,036,636 bekannt. Dort wird Magnetit in der Schlacke mit kohlenstoffhaltigen Materialien reduziert. Dabei erfolgt ein Mischen der Schlacke mit einem mechanischen Rührer, während die Reduktion der Schlacke stattfindet.

Aus der WO 01/49890 A1 ist ein Verfahren zum Herstellen von Blisterkupfer direkt aus Kupfersulfat-Konzentrat bekannt, bei dem das Kupfer aus feingemahlenem und gekühltem Kupferstein in einem Reaktionsbehälter unter Sauerstoffanreicherung gewonnen wird. Die Sauerstoffanreicherung erfolgt unter Zufuhr von Sauerstoff-angereicherter Luft, wobei der Sauerstoffgehalt mindestens 50 % beträgt. Blisterkupfer, auch »Blasenkupfer« genannt, ist unraffiniertes, blasiges Kupfer. Kupfer besitzt im schmelzflüssigen Zustand ein höheres Lösevermögen für Gase als das feste Metall. Beim Erstarren scheiden sich die Gase als kleine Blasen (englisch: blister) im Kupfer aus.

Die US 4,060,409 zeigt ein pyrometallurgisches System, mit dem Material in geschmolzenem Zustand gehalten werden kann. Das System weist ein Gefäß zur Aufnahme des Materials auf, wobei im Gefäßinneren eine Anzahl von Zellen gleicher Größe ausgebildet sind. Weiterhin ist eine Vielzahl mechanischer Rührer vorgesehen, um das geschmolzene Material rühren zu können.

Die US 6,436,169 offenbart ein Verfahren zum Betreiben eines Kupfer-Schmelzofens, wobei eine eisenhaltige Substanz mit mehr als 80 Gewichtsprozent Eisen zugegeben wird, die eine Dichte zwischen 3,0 und 8,0 aufweist; der Durchmesser der Partikel liegt dabei zwischen 0,3 und 15 Millimetern. Die eisenhaltige Substanz wird eisenhaltiger Kupferschlacke zugegeben. Dann wird eine Reduktion von $Fe_3O_4$ zu $FeO$ durchgeführt.

Eine Vorrichtung zur kontinuierlichen Kupferverhüttung ist aus der EP 0 487 032 B1 bekannt. Sie weist einen Schmelzofen zum Schmelzen und Oxidieren von Kupferkonzentrat auf, um ein Gemisch aus Stein und Schlacke zu erzeugen. Weiterhin ist ein Trennofen zum Trennen des Steins von der Schlacke vorgesehen. In einem Konverterofen wird zur Erzeugung von Rohkupfer der von der Schlacke abgetrennte Stein oxidiert. Schmelzeabstichrinnmittel verbinden den Schmelzofen, den Trennofen und den Konverterofen. Zum Raffinieren des in dem Konverterofen erzeugten Kupfers sind Anodenöfen vorgesehen.

Eine Verbindung zwischen dem Konverterofen und den Anodenöfen wird mit Rohkupferrinnmittel geschaffen.

Aus der EP 0 487 031 B1 geht ein Verfahren zum kontinuierlichen Schmelzen von Kupfer hervor. Auch hier ist ein Schmelzofen, ein Trennofen und ein Konverterofen vorgesehen, die über Fließverbindungsmittel miteinander verbunden sind. Ferner sind Anodenöfen vorgesehen, die mit dem Konverterofen in Fließverbindung stehen. Das Kupferkonzentrat wird in den Schmelzofen eingespeist, wo ein Schmelzen und Oxidieren des Konzentrates zur Herstellung einer Mischung aus Rohstein und Schlacke erfolgt. Anschließend wird die Mischung aus Rohstein und Schlacke dem Trennofen zugeführt, in dem ein Trennen des Rohsteins von der Schlacke erfolgt. Dann wir der von der Schlacke getrennte Rohstein in den Konverterofen verbracht, wo er zur Herstellung von Rohkupfer oxidiert wird. Das Rohkupfer fließt dann in einen der Anodenöfen, wo das Kupfer hergestellt wird.

Weitere Lösungen teilweise ähnlicher Art sind aus der US 5,765,489, aus der DE 27 07 578 A1 und aus der US 5,479,433 bekannt.

Die vorbekannten Verfahren zur Gewinnung eines Metalls aus einer das Metall enthaltenden Schlacke sind bezüglich ihrer Effizienz noch verbesserungsbedürftig. Der Erfindung liegt daher die Aufgabe zugrunde, ein verbessertes Verfahren zur Rückgewinnung insbesondere von Kupfer aus Schlacken bereitzustellen.

Die Lösung dieser Aufgabe durch die Erfindung ist dadurch gekennzeichnet, dass die metallhaltige Schlacke in einem ersten als Wechselstrom-Elektroofen ausgebildeten Ofen erhitzt und die Schmelze von dem ersten Ofen in einen zweiten als Gleichstrom-Elektroofen ausgebildeten Ofen verbracht wird.

Mit Vorteil ist vorgesehen, dass das zu gewinnende Metall Kupfer ist, das sich in einer kupferhaltigen Schlacke befindet.

Danach bezieht sich die Erfindung also darauf, eine Rückgewinnung von Kupfer aus dem Erschmelzen und der Umwandlung von Kupferschlacken durch eine zweistufige Schlackereduktion und Sedimentation im AC-Lichtbogenofen und DC-Reduktions-Rinnenofen, vorzugsweise - wie weiter unten zu sehen sein wird - mit elektromagnetischem Rühren, vorzunehmen.

Das vorgeschlagene Verfahren kann auch eingesetzt werden, um Metalle wie Blei, Zink, Platin oder Nickel aus ihren jeweiligen Schlacken zurückzugewinnen.

In dem ersten als Wechselstrom-Elektroofen ausgebildeten Ofen erfolgt bevorzugt eine Vorabreduktion der Schlacke und ein Abscheiden von Metallstein, insbesondere von Kupferstein, wobei in dem zweiten als Gleichstrom-Elektroofen ausgebildeten Ofen dann eine tiefgehende Schlackenreduktion und ein Entfernen von Einschlüssen erfolgt.

In dem zweiten als Gleichstrom-Elektroofen ausgebildeten Ofen erfolgt mit Vorteil eine elektrolytische Abscheidung des zu gewinnenden Metalls.

Eine wesentliche Verbesserung des Gewinnungsprozesses lässt sich noch erreichen, wenn weiterhin vorgesehen wird, dass in dem zweiten als Gleichstrom-Elektroofen ausgebildeten Ofen während der Gewinnung des Metalls ein elektromagnetisches Rühren der Schmelze erfolgt. Zur Erzeugung des elektromagnetischen Rührens kann mindestens ein Elektromagnet auf die sich im zweiten Ofen befindliche Schmelze wirken. Alternativ kann auch mindestens ein Dauermagnet hierfür vorgesehen werden. Der mindestens eine Magnet sollte besonders bevorzugt ein Magnetfeld zwischen 50 und 1.000 Gauss erzeugen, wobei das Magnetfeld zumindest einen Teil des Querschnittes der Schmelze und des Bereichs der Elektroden in dem zweiten Ofen erfasst.

In den ersten Ofen wird bevorzugt während des Erhitzens ein Reduktionsmittel, insbesondere Koks, zugegeben.

Auf die Schmelzeoberfläche in dem zweiten Ofen kann kohlenstoffhaltiges Material, insbesondere Koks, so aufgegeben werden, dass sich eine Schicht des kohlenstoffhaltiges Materials mit im wesentlichen konstanter Dicke ausbildet, wobei die Schicht, als Anode wirkend, mit einer elektrischen Verbindung in Kontakt steht.

Im Bodenbereich unter der Schmelze kann in dem zweiten Ofen eine Schicht aus Metallstein, insbesondere aus Kupferstein, mit im wesentlichen konstanter Dicke aufrechterhalten werden, wobei die Schicht, als Kathode wirkend, mit einer elektrischen Verbindung in Kontakt stehen kann.

Die Vorrichtung, die insbesondere zur Durchführung des erfindungsgemäßen Verfahrens ausgebildet ist, ist gekennzeichnet durch einen ersten als Wechselstrom-Elektroofen ausgebildeten Ofen und einen zweiten als Gleichstrom-Elektroofen ausgebildeten Ofen, wobei zwischen dem ersten Ofen und dem zweiten Ofen ein Verbindungsmittel für Schmelze, insbesondere eine Fließrinne, vorhanden ist.

Der erste Ofen kann zwei Elektroden aufweisen, die in die sich im ersten Ofen befindliche Schmelze eintauchen und an eine Wechselstromquelle angeschlossen sind. Der zweite Ofen kann zwei plattenartig ausgebildete Elektroden aufweisen, die sich horizontal erstreckend im oberen Bereich und im unteren Bereich der sich im zweiten Ofen befindlichen Schmelze angeordnet und an eine Gleichstromquelle angeschlossen sind. Die sich im oberen Bereich befindliche Elektrode kann als Koksbett ausgebildet sein, das mit einem elektrischen Kontakt, insbesondere mit einer Graphit-Elektrode, in Verbindung steht. Die sich im unteren Bereich befindliche Elektrode kann als Schicht aus Metallstein, insbesondere aus Kupferstein, ausgebildet sein, die mit einem elektrischen Kontakt, insbesondere mit einer Graphit-Elektrode, in Verbindung steht. Der zweite Ofen ist bevorzugt als Rinnenofen ausgebildet. Die Vorrichtung hat schließlich bevorzugt Magnete, insbesondere Elektromagnete, in den Seitenbereichen des zweiten Ofens, deren magnetische Feldlinien zur Stromflussrichtung in zumindest einigen der stromführenden Elemente zumindest teilweise rechtwinkelig stehen. Damit kann eine Lorentzkraft erzeugt werden, die den elektromagnetischen Rühreffekt erzeugt.

Die Erfindung schlägt also eine zweistufige Schlackereduktion und die Entfernung des Kupfers in zwei Lichtbogenöfen vor. Der erste Ofen, der Drehstrom-Lichtbogenofen, dient der Vorabreduktion der Schlacke und der Abscheidung von Kupferstein, gefolgt von einer tiefgehenden Schlackereduktion und Entfernung von Einschlüssen in einem DC-Reduktions-Rinnenofen mit elektromagnetischem Rühren. Der Einsatz von elektromagnetischem Rühren, welches den Stoffübergang auf die Reduktionsfläche und die Koaleszenz der Einschlüsse verbessert, gemeinsam mit Schlackeelektrolyse und elektrokinetischen Phänomenen ermöglichen eine wirksame Schlackereinigung und hohe Rückgewinnung von Kupfer.

In den Zeichnungen ist ein Ausführungsbeispiel der Erfindung dargestellt.
Es zeigen:

Fig. 1          eine schematische Darstellung eines Drehstrom-Lichtbogenofens und eines nachgeschalteten DC-Reduktions-Rinnenofens und

Fig.2a und Fig. 2b      die geschnittene Vorderansicht und die geschnittene Seitenansicht des DC-Reduktions-Rinnenofens zur tiefgehenden Schlackereduktion und Entfernung von Einschlüssen unter Verwendung eines Koksbetts und flüssigem Kupferstein als Elektroden.

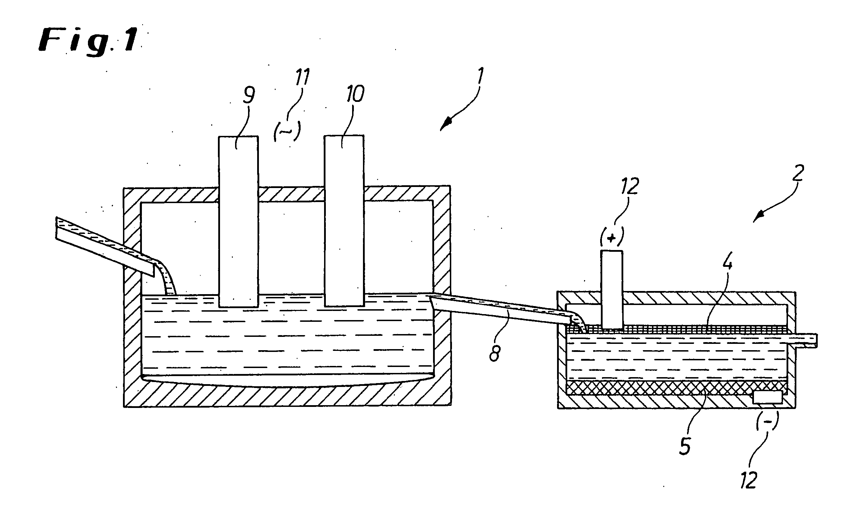

In Fig. 1 ist ein erster Ofen 1 in Form eines Wechselstromofens zu sehen, an den sich ein zweiter Ofen 2 in Form eines Gleichstromofens anschließt. Die im Ofen 1 vorbereitete Schmelze aus Kupferschlacke wird über ein Verbindungsmittel 8 in Form einer Schmelzerinne in den zweiten Ofen 2 geleitet.

In den ersten Ofen 1 und namentlich in die sich in diesem Ofen befindliche Schlackenschmelze tauchen zwei Elektroden 9 und 10 in Form von Graphit-Elektroden ein, die an eine Wechselstromquelle 11 angeschlossen sind.

Der zweite Ofen 2 hat einen Schlackeneintritt 16 für die Schlacke 15 sowie einen Schlackenaustritt 17. Im zweiten Ofen 2 befinden sich zwei Elektroden 4 und 5, die plattenartig ausgebildet sind. Beide Elektroden 4, 5 sind über elektrische Verbindungen in Form einer Graphit-Kontaktelektrode 6 bzw. 7 an eine Gleichstromquelle 12 gekoppelt. Die obere horizontal liegende Elektrode 6 ist an den Plus-Pol der Gleichstromquelle 12 angeschlossen und dient als Anode. Entsprechend ist die untere ebenfalls horizontal angeordnete Elektrode 5 an den Minus-Pol der Gleichstromquelle 12 angeschlossen und dient damit als Kathode. Über einen elektrolytischen Prozess wird das Kupfer gewonnen.

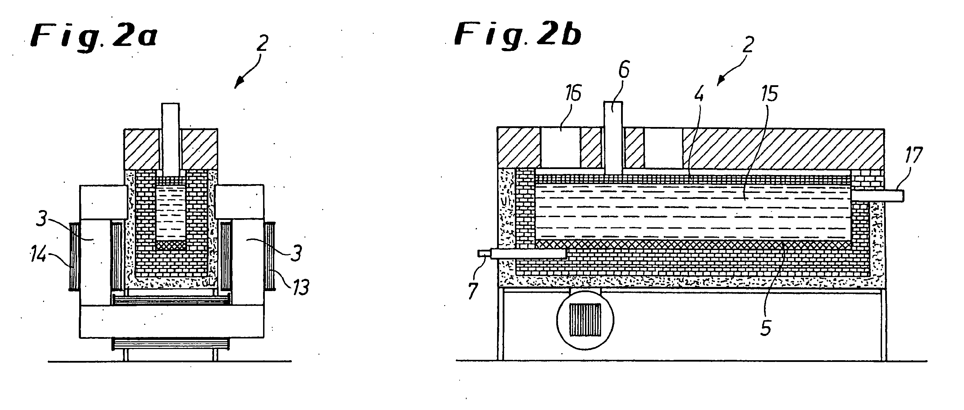

Wie Fig. 2 entnommen werden kann, ist der zweite Ofen 2 als Rinnenofen ausgebildet. Seitlich sind elektrische Spulen 13 und 14 um Metallkerne angeordnet, die damit Elektromagnete 3 bilden. Mit diesen Magneten wird ein elektromagnetischer Rühreffekt erzeugt, die die Schmelze im zweiten Ofen 2 rührt, s. u.

Gemäß dem erfindungsgemäßen Prozess wird flüssige Schlacke im Wesentlichen in dem AC-Lichtbogenofen 1 (Wechselstromofen) verarbeitet. Magnetit und kupferartiges Oxid in der Schlacke reagieren mit dem Kohlenstoff der Graphitelektroden 9, 10 und dem zugegebenen Koks gemäß der Gleichungen:

$$Fe_3O_4 + CO = 3\ FeO + CO_2$$

$$Cu_2O + CO = 2\ Cu + CO_2$$

$$CO_2 + C = 2\ CO$$

Die Reduktion von kupferartigem Oxid wird durch die Magnetitkoreduktion eingeschränkt. Die Bedingungen der Koreduktion werden durch das Gleichgewicht dieser Reaktion bestimmt:

$$(Cu_2O)_{Schacke} + 3\ (FeO)_{Schlacke} \Leftrightarrow 2\ (CU)_{Metall} + (Fe_3O_4)_{Schlacke}$$

Der Kupfergehalt in der Schmelzenschlacke liegt zwischen 2 und 10 % und der Magnetitgehalt zwischen 10 und 20 % je nach Schmelzverfahren und der erzeugten Steingüte.

Der erste Schritt der Schlackebehandlung im AC-Lichtbogenofen 1 konzentriert sich auf die Magnetitreduktion auf einen Wert von 7 bis 8 % und einen Kupfergehalt von 0,8 bis 1,2 %, was einen Einheitsenergieverbrauch von 50 bis 70 kWh/t erfordert, je nach ursprünglicher Schlackezusammensetzung. Der oben genannte Grad der Schlackereduktion erlaubt die Reduktionszeit um ca. 50 % zu kürzen, was einer zweifachen Erhöhung der Ofenbehandlungskapazitäten entspricht. Die Schlacke wird kontinuierlich oder in regelmäßigen Abständen zum zweiten DC-Reduktions-Rinnenofen 2 (Gleichstromofen) abgestochen.

Das Koksbett 4 auf der Schlackeoberfläche, mit dem die Graphitelektrode 6 den Kontakt zur Gleichstromquelle 12 herstellt, hat die Funktion der Anode und der flüssige Stein 5 in Kontakt mit dem Graphitblock 7 ist eine Kathode im DC-Reduktions-Rinnenofen 2.

Einlassseitig im Ofen sind zwei Permanentmagnetblöcke im Fenster des Ofengefäßes angeordnet und zwar auf halber Höhe der Schlackeschicht. Das Zusammenwirken eines nicht gleichförmigen, horizontalen magnetischen Felds mit einem nicht gleichförmigen vertikalen konstanten elektrischen Feld induziert den Gradienten der auf die Schlacke wirkenden Lorentzkraft.

Die Lorentz-Kraft, die in jedem elementaren Volumen leitfähiger Flüssigkeit, wie z. B. flüssiger Schlacke, in gekreuzten konstanten elektrischen und permanenten magnetischen Feldern wirkt, verändert offensichtlich die relative Dichte der Flüssigkeit:

$$\gamma_A = \gamma \pm j \times B$$

mit:

$\gamma_A$ - scheinbare relative Dichte in N m$^{-3}$,
$\gamma$ - relative Dichte in N m$^{-3}$,
j - Stromdichte in einer Flüssigkeit in A m$^{-2}$,
B - magnetische Induktion in T.

Mit oben genannter Kraft bei einer Stromdichte von 200 bis 2000 A/m$^2$ und einer magnetischen Feldstärke von 0,005 bis 0.1 Tesla ist die Schlackegeschwindigkeit 1 bis 2 Größenordnungen größer im Vergleich zu den natürlichen Konvektionsgeschwindigkeiten. Sie versetzt die Schlacke im Bereich des Magnets in intensive Rotation, wodurch der Magnetitübergang auf die Koksoberfläche verbessert und die Reduktion beschleunigt wird. Bei der hohen Temperatur der Schlackereduktion (1200 bis 1300 °C) werden die Reaktionen bei der Reduktion des Magnetits und Koreduktion des kupferartigen Oxids durch Stoffübergang gesteuert, das Rühren der Schlacke erhöht die Reduktionsgeschwindigkeit wesentlich.

Darüber hinaus verhindert das Rühren der Schlacke die Bildung von stagnierender Flüssigkeit und homogenisiert die Schlacke. Das Rühren der Schlacke in der ersten Stufe des Verfahrens für die Entfernung von Einschlüssen ist günstig, womit die Wahrscheinlichkeit ihrer Kollision und ihrer Koaleszenz erhöht wird.

Die Schlackebewegung erhöht die Wahrscheinlichkeit der Kollision von Stein-einschlüssen und metallischem Kupfer, womit deren Koaleszenz und Absetzen verbessert wird. Der zweite Teil des Rinnenofens 2 erfährt keine intensive Schlackebewegung und erlaubt eine ruhige Sedimentation der Einschlüsse.

Aufgrund der Ionenstruktur der flüssigen Schlacke regt der Gleichstrom die Schlackeelektrolyse an. Kathodische Reduktion und anodische Oxidation resultieren in der Magnetitreduktion, Kupferabscheidung und Bildung von Kohlenmonoxid auf den Elektroden entsprechend den Reaktionen:

Kathode:  $Fe^{3+} + e = Fe^{2+}$

$Cu^+ + e = Cu^o$

Anode:  $SiO_4^{4-} + 2 C = SiO_2 + 2 [CO] + 4 e$

$O^{2-} + C = [CO] + 2 e$

Die kathodische Zerlegung von Magnetit und die Abscheidung von Kupfer erhöhen die gesamte Geschwindigkeit der Magnetitreduktion und Entfernung von Kupfer. Die Abscheidung von CO als anodisches Produkt bildet weitere Zentren der Magnetitreduktion.

Die zusätzliche auf metallische Einschlusse wirkende Kraft als Ergebnis der scheinbaren Änderung der relativen Dichte der Schlacke und die Interaktion des Stroms im Metall und des Magnetfelds sind gleich:

$$F_{EMB} = 2 \pi \ j \ B \ r^3$$

mit:

$F_{EBF}$ - Auftriebskraft in N,
j - Stromdichte in A/m$^2$ ,
B - Induktivität magnetisches Feld in T,

r - Radius des Einschlusses in m.

Die Interaktion des elektrischen Felds mit der elektrischen Oberflächenladung auf der Einschlussoberfläche lässt den Metalltropfen entlang der elektrischen Feldlinien wandern; die Wanderungsgeschwindigkeit, bekannt als Phänomen der Elektrokapillaritätsbewegung, wird durch die Formel von Levich beschrieben:

$$v_{EM} = \frac{\varepsilon\, E\, r}{2\,\eta_s \left(1 + \dfrac{r}{2\,\kappa\, w}\right)}$$

mit:

$V_{EM}$ - Wanderungsgeschwindigkeit in m s$^{-1}$,
$\varepsilon$ - Oberflächenladung in coul m$^{-2}$,
E - Stärke des elektrischen Felds in V m$^{-1}$,
$\eta_S$ - Schlackeviskosität in Pa s,
$\kappa$ - Spezifische Leitfähigkeit der Schlacke in $\Omega^{-1}$ m$^{-1}$,
w - Widerstand der Metall/Schlackegrenzfläche in $\Omega$ m$^2$.

Basierend auf der elektrischen Ladungsdichte nimmt die Wanderungsgeschwindigkeit des Metalls oder der Steineinschlüsse gemäß der oben aufgeführten Formel mit dem Tropfenradius ab. Die Wanderungsgeschwindigkeit ist bei kleineren Einschlüssen wesentlich höher als das Absetzen durch Schwerkraft.
Die Schlackeverarbeitung in gekreuzten elektrischen und magnetischen Feldern nutzt eine Reihe von Phänomenen, durch die der Schlackereinigungsprozess sehr intensiv und effektiv wird. Elektromagnetisches Rühren der Schlacke erhöht den Stoffübergang, wodurch die Schlackereduktion beschleunigt und die Koaleszenz der Einschlüsse gefördert wird. Gleichzeitige Schlackeelektrolyse wirkt bei kathodischer Reduktion von Magnetit und Kupferoxid und anodischer Bildung von Kohlenmonoxid als zusätzliches Reduktionsmittel. Elektrokapillare Wanderung der Einschlüsse begünstigt deren Koaleszenz und führt zur Entfernung von Einschlüssen aus der Schlacke.

Beispiel:

Schlacke aus dem Erschmelzen von Konzentrat in einem Flash-Schmelzaggregat enthält 4% Cu und 15% $Fe_3O_4$. Die Schlacke wird alle 3 Stunden abgestochen und durch eine Rinne an den 9,5 MVA-Drehstrom-Lichtbogenofen 1 übergeben. Die Schlackeproduktionsmenge beträgt 30 t/h, dies entspricht einer Verarbeitung von 90 t in jedem Zyklus. Der Koksverbrauch beläuft sich auf ca.8 kg/t und der Energieverbrauch auf ungefähr 70 kWh/t, entsprechend einer durchschnittlichen Leistungsaufnahme von 6,3 MW. Nach einer Stunde beginnt der Schlackeabstich auf dem Lichtbogenofen über einen Zeitraum von 2 Stunden. Die Schlacke mit einem Cu-Gehalt von 1,1 % und 7 % $Fe_3O_4$ wird durch die Rinne 8 in den DC-Lichtbogenofen 2 mit einer Kammer transportiert, welche 4 m lang und 1 m breit ist. Der Reduktions-Rinnenofen zur halbkontinuierlichen Schlackereinigung ist in Fig. 2 dargestellt. Die Schlacke fließt 2 Stunden kontinuierlich durch den Reduktions-Rinnenofen 2. Bei einem Schlackespiegel von 1 m beträgt die durchschnittliche Verweilzeit ungefähr 30 Minuten. Bei Ofenwärmeverlusten von 1 GJ/h beträgt der Einheitsstromverbrauch ungefähr 35 kWh/t und die erforderliche Leistungsaufnahme 1 MW. Bei einer geschätzten Spannung von 100 V liegt die Stromstärke in der Größenordnung von 10 kA. Der geschätzte Koksverbrauch ist ca. 2 kg/t. Die Fertigschlacke enthält 0,5% Cu und 4% Magnetit. Der gesamte Energieverbrauch beläuft sich auf 105 kWh/t und der Koksverbrauch auf 10 kg/t.
Das erfindungsgemäße Verfahren arbeitet gemäß dem Ausführungsbeispiel also als zweistufige Kupferschlackenreinigung in Lichtbogenöfen.
Es kann ein periodisches oder ein kontinuierliches Chargieren der Schlacke in den ersten Lichtbogenofen 1 erfolgen. In diesen Ofen 1 werden die Graphit- bzw. Kohlenstoffelektroden in die geschmolzene Schlacke eingeführt und über sie eine Stromzufuhr bewerkstelligt. Auf die Schlackenoberfläche wird Koks oder ein anderes Reduktionsmittel zugegeben. Die Regelung der Schlackentemperatur im Schlackenreinigungsofen erfolgt durch Regelung der Leistungsaufnahme. Schließlich erfolgt ein Abstechen der gewonnenen Metalle in Form von Kupferstein und metallischem Kupfer.
Auch im DC-Rinnenofen 2 kann ein periodisches oder kontinuierliches Abstechen der Schlacke erfolgen. Ein Gleichstrom wird zwischen der als Anode fungierenden Koksschicht an der Schlackenoberfläche und der als Kathode fungierenden flüssigen Stein angelegt. Das überlagerte, örtlich begrenzte Magnetfeld, das durch Elektromagnete oder Dauermagnete erzeugt wird, wird benutzt, um die Schlacke in Bewegung zu versetzen. Auf die Schlackenoberfläche wird Koks chargiert, um die Schichtdicke der Koksschicht konstant zu halten und um günstige elektrische Kontaktbedingungen mit den Graphit- oder Kohlenstoffelektroden aufrecht zu erhalten. Auch hier kann ein kontinuierliches oder ein periodisches Abstechen der gereinigten Fertigschlacke erfolgen. Gleichermaßen kann periodisch das Abstechen des Kupfersteins oder des Kupfersteins zusammen mit metallischem Kupfer erfolgen. Weiterhin wird eine Kupferstein-(Kupfer-)Schicht auf dem Ofenboden als flüssige Kathode aufrechterhalten, wobei die Katzode in Kontakt mit einem Graphitblock steht.

Die Kupferschlacke kann diejenige Schlacke darstellen, die durch das Erschmelzen von Kupferkonzentraten zu Kupferstein oder unmittelbar zu Blisterkupfer gewonnen wird, sowie diejenige Schlacke, die durch das Umwandeln von Kupferstein gewonnen wird.

Als erster Lichtbogenofen 1 kann ein klassischer AC-Drehstrom-Lichtbogenofen oder ein DC-Lichtbogenofen eingesetzt werden.

Die Induktion eines durch Permanentmagneten oder Elektromagneten erzeugten Magnetfelds liegt bevorzugt im Bereich von 50 bis 1.000 Gauss, wobei das permanente magnetische Feld einen Teil des Querschnitts der Flüssigschlacke im Bereich der Elektrode oder Elektroden in Kontakt mit dem Koksbett abdecken.

Als Elektroden werden bevorzugt Graphit- oder Kohlenstoffelektroden eingesetzt. Der Ort der Elektroden lässt die Stromlinien die magnetischen Feldlinien kreuzen. Die optimale Positionierung der Elektroden führt dazu, dass die Stromlinien senkrecht zu den magnetischen Feldlinien verlaufen.

Wie erläutert, ist die Schicht des flüssigen Metalls bzw. der Metallstein unter der Schlacke in Kontakt mit einer Graphit- oder anderen Elektrode, die die Funktion der Kathode hat; der Kohlenstoff bzw. die Koksschicht an der Schlackeoberfläche ist in Kontakt mit einer Graphit- oder anderen Elektrode, die die Funktion der Anode hat.

Die Stärke des Gleichstroms liegt bevorzugt im Bereich zwischen 500 und 50.000 A, abhängig von der Größe des Schlackereinigungsaggregats, der Schlackemenge und der Temperatur.

Wengleich das vorgeschlagene Verfahren bevorzugt für die Gewinnung von Kupfer vorgesehen ist, kann es auch für andere Metalle wie für Blei (Pb), Zink (Zn), Platin (Pt) oder Nickel (Ni) angewendet werden.

Durch die zweistufige Schlackereduktion und die Entfernung des Kupfers in zwei Lichtbogenöfen wird erreicht, dass der erste Drehstrom-Lichtbogenöfen zur Vorabreduktion der Schlacke und Abscheidung von Kupferstein eingesetzt werden kann, gefolgt von einer tiefgehenden Schlackereduktion und der Entfernung von Einschlüssen in einem DC-Reduktions-Rinnenofen mit elektromagnetischem Rühren. Der Einsatz von elektromagnetischem Rühren, welches den Stoffübergang auf die Reduktionsfläche und die Koaleszenz der Einschlüsse verbessert, gemeinsam mit Schlackeelektrolyse und elektrokinetischen Phänomenen ermöglichen eine wirksame Schlackereinigung und eine hohe Rückgewinnung von Kupfer.

Bezugszeichenliste:

| 1 | erster Ofen (Wechselstromofen) |
|---|---|
| 2 | zweiter Ofen (Gleichstromofen) |
| 3 | Elektromagnet |
| 4 | Elektrode (Anode) |
| 5 | Elektrode (Kathode) |
| 6 | elektrische Verbindung (Graphitelektrode) |
| 7 | elektrische Verbindung (Graphitelektrode) |
| 8 | Verbindungsmittel |
| 9 | Elektrode |
| 10 | Elektrode |
| 11 | Wechselstromquelle |
| 12 | Gleichstromquelle |
| 13 | elektrische Spule |
| 14 | elektrische Spule |
| 15 | Schlacke |
| 16 | Schlackeneintritt |
| 17 | Schlackenaustritt |

**Patentansprüche**

1. Verfahren zur Gewinnung eines Metalls aus einer das Metall enthaltenden Schlacke, bei dem die verflüssigte metallhaltige Schlacke in mindestens einem Lichtbogenofen (1, 2) erhitzt wird,
   **dadurch gekennzeichnet,**
   **dass** die metallhaltige Schlacke in einem ersten als Wechselstrom-Elektroofen ausgebildeten Ofen (1) erhitzt und die Schmelze von dem ersten Ofen (1) in einen zweiten als Gleichstrom-Elektroofen ausgebildeten Ofen (2) verbracht wird.

2. Verfahren nach Anspruch 1,
   **dadurch gekennzeichnet,**
   **dass** das zu gewinnende Metall Kupfer (Cu) ist, das sich in einer kupferhaltigen Schlacke befindet.

3. Verfahren nach Anspruch 1,
   **dadurch gekennzeichnet,**
   **dass** das zu gewinnende Metall Blei (Pb), Zink (Zn), Platin (Pt) oder Nickel (Ni) ist, das sich in einer Schlacke befindet.

4. Verfahren nach einem der Ansprüche 1 bis 3,
   **dadurch gekennzeichnet,**
   **dass** in dem ersten als Wechselstrom-Elektroofen ausgebildeten Ofen (1) eine Vorabreduktion der Schlacke und ein Abscheiden von Metallstein, insbesondere von Kupferstein, erfolgt und dass in dem zweiten als Gleichstrom-Elektroofen ausgebildeten Ofen (2) eine tiefgehende Schlackenreduktion und ein Entfernen von Einschlüssen erfolgt.

5. Verfahren nach einem der Ansprüche 1 bis 4,
   **dadurch gekennzeichnet,**
   **dass** in dem zweiten als Gleichstrom-Elektroofen ausgebildeten Ofen (2) eine elektrolytische Abscheidung des zu gewinnenden Metalls erfolgt.

6. Verfahren nach einem der Ansprüche 1 bis 5,
   **dadurch gekennzeichnet,**
   **dass** in dem zweiten als Gleichstrom-Elektroofen ausgebildeten Ofen (2) während der Gewinnung des Metalls ein elektromagnetisches Rühren der Schmelze erfolgt.

7. Verfahren nach Anspruch 6,
   **dadurch gekennzeichnet,**
   **dass** zur Erzeugung des elektromagnetischen Rührens mindestens ein Elektromagnet (3) auf die sich im zweiten Ofen (2) befindliche Schmelze wirkt.

8. Verfahren nach Anspruch 6,
   **dadurch gekennzeichnet,**
   **dass** zur Erzeugung des elektromagnetischen Rührens mindestens ein Dauermagnet auf die sich im zweiten Ofen (2) befindliche Schmelze wirkt.

9. Verfahren nach Anspruch 7 oder 8,
   **dadurch gekennzeichnet,**
   **dass** der mindestens eine Magnet ein Magnetfeld zwischen 50 und 1.000 Gauss erzeugt und dass das Magnetfeld zumindest einen Teil des Querschnittes der Schmelze und des Bereichs der Elektroden (4, 5) in dem zweiten Ofen (2) erfasst.

10. Verfahren nach einem der Ansprüche 1 bis 9,
    **dadurch gekennzeichnet,**
    **dass** in den ersten Ofen (1) während des Erhitzens ein Reduktionsmittel, insbesondere Koks, zugegeben wird.

11. Verfahren nach einem der Ansprüche 1 bis 10,
    **dadurch gekennzeichnet,**
    **dass** auf die Schmelzeoberfläche in dem zweiten Ofen (2) kohlenstoffhaltiges Material, insbesondere Koks, so aufgegeben wird, dass sich eine Schicht des kohlenstoffhaltiges Materials mit im wesentlichen konstanter Dicke ausbildet, wobei die Schicht, als Anode (4) wirkend, mit einer elektrischen Verbindung (6) in Kontakt steht.

**12.** Verfahren nach einem der Ansprüche 1 bis 11,
**dadurch gekennzeichnet,**
**dass** im Bodenbereich unter der Schmelze in dem zweiten Ofen (2) eine Schicht aus Metallstein, insbesondere aus Kupferstein, mit im wesentlichen konstanter Dicke aufrechterhalten wird, wobei die Schicht, als Kathode (5) wirkend, mit einer elektrischen Verbindung (7) in Kontakt steht.

**13.** Vorrichtung zur Gewinnung eines Metalls aus einer das Metall enthaltenden Schlacke, insbesondere zur Durchführung des Verfahrens nach einem der Ansprüche 1 bis 12,
**gekennzeichnet durch**
einen ersten als Wechselstrom-Elektroofen ausgebildeten Ofen (1) und
einen zweiten als Gleichstrom-Elektroofen ausgebildeten Ofen (2), wobei zwischen dem ersten Ofen (1) und dem zweiten Ofen (2) ein Verbindungsmittel (8) für Schmelze vorhanden ist.

**14.** Vorrichtung nach Anspruch 13,
**dadurch gekennzeichnet,**
**dass** der erste Ofen (1) zwei Elektroden (9, 10) aufweist, die in die sich im ersten Ofen (1) befindliche Schmelze eintauchen und an eine Wechselstromquelle (11) angeschlossen sind.

**15.** Vorrichtung nach Anspruch 13 oder 14,
**dadurch gekennzeichnet,**
**dass** der zweite Ofen (2) zwei plattenartig ausgebildete Elektroden (4, 5) aufweist, die sich horizontal erstreckend im oberen Bereich und im unteren Bereich der sich im zweiten Ofen (2) befindlichen Schmelze angeordnet und an eine Gleichstromquelle (12) angeschlossen sind.

**16.** Vorrichtung nach Anspruch 15,
**dadurch gekennzeichnet,**
**dass** die sich im oberen Bereich befindliche Elektrode (4) als Koksbett ausgebildet ist, das mit einem elektrischen Kontakt (6), insbesondere mit einer Graphit-Elektrode, in Verbindung steht.

**17.** Vorrichtung nach Anspruch 15 oder 16,
**dadurch gekennzeichnet,**
**dass** die sich im unteren Bereich befindliche Elektrode (5) als Schicht aus Metallstein, insbesondere aus Kupferstein, ausgebildet ist, die mit einem elektrischen Kontakt (7), insbesondere mit einer Graphit-Elektrode, in Verbindung steht.

**18.** Vorrichtung nach einem der Ansprüche 13 bis 17,
**dadurch gekennzeichnet,**
**dass** der zweite Ofen (2) als Rinnenofen ausgebildet ist.

**19.** Vorrichtung nach einem der Ansprüche 13 bis 18,
**dadurch gekennzeichnet,**
**dass** Magnete, insbesondere Elektromagnete (3), in den Seitenbereichen des zweiten Ofens (2) angeordnet sind, deren magnetische Feldlinien zur Stromflussrichtung in zumindest einigen der stromführenden Elemente (4, 5) zumindest teilweise rechtwinkelig stehen.

**Claims**

**1.** A method for the extraction of a metal from a slag containing the metal, in which the liquefied slag containing the metal is heated in at least one arc furnace (1, 2),
**characterised in that** the slag containing the metal is heated in a first furnace (1) designed as an alternating current electrical furnace, and the melt from the first furnace (1) is conveyed into a second furnace (2) designed as a direct current electrical furnace.

**2.** The method according to Claim 1,
**characterised in that** the metal to be extracted is copper (Cu), which is located in a slag containing copper.

**3.** The method according to Claim 1,
**characterised in that** the metal to be extracted is lead (Pb), zinc (Zn), platinum (Pt), or nickel (Ni), which is located in a slag.

4. The method according to one of the Claims 1 to 3,
**characterised in that** in the first furnace (1) designed as an alternating current electrical furnace a preliminary reduction of the slag and a separation of metal ore, in particular of copper ore, takes place,
and **in that** in the second furnace (2) designed as a direct current electrical furnace a thorough reduction of the slag and a removal of inclusions takes place.

5. The method according to one of the Claims 1 to 4,
**characterised in that** in the second furnace (2) designed as a direct current electrical furnace an electrolytic separation of the metal to be extracted takes place.

6. The method according to one of the Claims 1 to 5,
**characterised in that** in the second furnace (2) designed as a direct current electrical furnace during the extraction of the metal an electromagnetic agitation of the melt takes place.

7. The method according to Claim 6,
**characterised in that** for the generation of the electromagnetic agitation at least one electromagnet (3) acts on the melt located in the second furnace (2).

8. The method according to Claim 6,
**characterised in that** for the generation of the electromagnetic agitation at least one permanent magnet acts on the melt located in the second furnace (2).

9. The method according to Claim 7 or 8,
**characterised in that** the at least one magnet generates a magnetic field of between 50 and 1000 gauss, and **in that** the magnetic field covers at least one part of the cross-section of the melt and the region of the electrodes (4, 5) in the second furnace (2).

10. The method according to one of the Claims 1 to 9,
**characterised in that** in the first furnace (1) during the heating process a means of reduction, in particular coke, is added.

11. The method according to one of the Claims 1 to 10,
**characterised in that** material containing carbon, in particular coke, is so relinquished on the melt surface in the second furnace (2) that a layer of the material containing carbon is formed with essentially constant thickness, wherein the layer, acting as an anode (4), is in contact with an electrical connection (6).

12. The method according to one of the Claims 1 to 11,
**characterised in that** in the bottom region under the melt in the second furnace (2), a layer of metal matte, in particular of copper matte, is maintained with essentially constant thickness, wherein the layer, acting as a cathode (5), is in contact with an electrical connection (7).

13. A device for the extraction of a metal from a slag containing the metal, in particular for the execution of the method according to one of the Claims 1 to 12,
**characterised by** a first furnace (1) designed as an alternating current electric furnace, and a second furnace (2) designed as a direct current electric furnace, wherein
between the first furnace (1) and the second furnace (2) a means of connection (8) for a melt is present.

14. The device according to Claim 13,
**characterised in that** the first furnace (1) has two electrodes (9, 10), which are immersed in the melt located in the first furnace (1), and are connected to an alternating current source (11).

15. The device according to Claim 13 or 14,
**characterised in that** the second furnace (2) has two electrodes (4, 5) designed in plate form, which are arranged extending in a horizontal direction in the upper region and in the lower region of the melt located in the second furnace (2), and are connected to a direct current source (12).

16. The device according to Claim 15,
    **characterised in that** the electrode (4) located in the upper region is designed as a coke bed, which is connected with an electrical contact (6), in particular with a graphite electrode.

17. The device according to Claim 15 or 16,
    **characterised in that** the electrode (5) located in the lower region is designed as a layer of metal matte, in particular of copper matte, which is connected with an electrical contact (7), in particular with a graphite electrode.

18. The device according to one of the Claims 13 to 17,
    **characterised in that** the second furnace (2) is designed as a channel furnace.

19. The device according to one of the Claims 13 to 18,
    **characterised in that** magnets, in particular electromagnets (3), are arranged in the lateral regions of the second furnace (2), whose magnetic field lines are at least partly at right angles to the current flow direction in at least some of the current-carrying elements (4, 5).

**Revendications**

1. Procédé pour extraire un métal d'un laitier contenant le métal, dans lequel le laitier contenant le métal, liquéfié, est chauffé dans au moins un four à arc (1, 2), **caractérisé en ce que** le laitier contenant le métal est chauffé dans un premier four (1) réalisé sous forme d'un four électrique à courant alternatif et la masse fondue est amenée du premier four (1) dans un deuxième four (2) réalisé sous forme d'un four électrique à courant continu.

2. Procédé selon la revendication 1, **caractérisé en ce que** le métal à extraire est du cuivre (Cu) qui se trouve dans un laitier contenant du cuivre.

3. Procédé selon la revendication 1, **caractérisé en ce que** le métal à extraire est du plomb (Pb), du zinc (Zn), du platine (Pt) ou du nickel (Ni) qui se trouve dans un laitier.

4. Procédé selon l'une quelconque des revendications 1 à 3, **caractérisé en ce qu'**il se produit, dans le premier four (1) réalisé sous forme de four électrique à courant alternatif une préréduction du laitier et une séparation de minerai métallique, en particulier de minerai de cuivre et **en ce qu'**il se produit, dans le deuxième four (2) réalisé sous forme de four électrique à courant continu, une réduction profonde du laitier et une élimination des inclusions.

5. Procédé selon l'une quelconque des revendications 1 à 4, **caractérisé en ce qu'**il se produit dans le deuxième four (2) réalisé sous forme de four électrique à courant continu une séparation électrolytique du métal à extraire.

6. Procédé selon l'une quelconque des revendications 1 à 5, **caractérisé en ce qu'**il se produit dans le deuxième four (2) réalisé sous forme de four électrique à courant continu, pendant l'extraction du métal, une agitation électromagnétique de la masse fondue.

7. Procédé selon la revendication 6, **caractérisé en ce que** pour la production de l'agitation électromagnétique, au moins un électro-aimant (3) agit sur la masse fondue se trouvant dans le deuxième four (2).

8. Procédé selon la revendication 6, **caractérisé en ce que** pour la production de l'agitation électromagnétique, au moins un aimant permanent agit sur la masse fondue se trouvant dans le deuxième four (2).

9. Procédé selon la revendication 7 ou 8, **caractérisé en ce qu'**au moins un aimant produit un champ magnétique entre 50 et 1000 Gauss et **en ce que** le champ magnétique couvre au moins une partie de la section de la masse fondue et de la zone des électrodes (4,5) dans le deuxième four (2).

10. Procédé selon l'une quelconque des revendications 1 à 9, **caractérisé en ce qu'**on ajoute, dans le premier four (1) pendant le chauffage un réducteur, en particulier du coke.

11. Procédé selon l'une quelconque des revendications 1 à 10, **caractérisé en ce qu'**on met sur la surface de la masse fondue dans le deuxième four (2) du matériau contenant du carbone, en particulier du coke, de manière telle qu'il se forme une couche du matériau contenant du carbone présentant une épaisseur essentiellement constante, la couche, agissant comme anode (4) étant en contact avec un raccordement électrique (6).

12. Procédé selon l'une quelconque des revendications 1 à 11, **caractérisé en ce que** dans la zone du fond, sous la masse fondue dans le deuxième four (2) est maintenue une couche en minerai de métal, en particulier en minerai de cuivre, présentant une épaisseur essentiellement constante, la couche, agissant comme cathode (5) étant en contact avec un raccordement électrique (7).

13. Dispositif pour extraire un métal d'un laitier contenant le métal, en particulier pour réaliser le procédé selon l'une quelconque des revendications 1 à 12, **caractérisé par**
un premier four (1) réalisé sous forme d'un four électrique à courant alternatif et
un deuxième four (2) réalisé sous forme d'un four électrique à courant continu, un moyen de raccordement (8) pour la masse fondue se trouvant entre le premier four (1) et le deuxième four (2).

14. Dispositif selon la revendication 13, **caractérisé en ce que** le premier four (1) présente deux électrodes (9,10), qui plongent dans la masse fondue se trouvant dans le premier four (1) et qui sont raccordées à une source (11) de courant alternatif.

15. Dispositif selon la revendication 13 ou 14, **caractérisé en ce que** le deuxième four (2) présente deux électrodes (4,5) en forme de plaques, qui sont disposées en s'étendant horizontalement dans la zone supérieure et dans la zone inférieure de la masse fondue se trouvant dans le deuxième four (2) et qui sont raccordées à une source de courant continu (12).

16. Dispositif selon la revendication 15, **caractérisé en ce que** l'électrode (4) se trouvant dans la zone supérieure est réalisée sous forme de lit de coke qui est raccordé avec un contact électrique (6), en particulier avec une électrode en graphite.

17. Dispositif selon la revendication 15 ou 16, **caractérisé en ce que** l'électrode (5) se trouvant dans la zone inférieure est réalisée sous forme d'une couche en minerai de métal, en particulier en minerai de cuivre, qui est raccordée avec un contact électrique (7), en particulier avec une électrode en graphite.

18. Dispositif selon l'une quelconque des revendications 13 à 17, **caractérisé en ce que** le deuxième four (2) est réalisé sous forme d'un four électrique à canal.

19. Dispositif selon l'une quelconque des revendications 13 à 18, **caractérisé en ce que** des aimants, en particulier des électro-aimants (3), sont disposés dans les zones latérales du deuxième four (2), dont les lignes de champ magnétiques sont au moins en partie perpendiculaires par rapport au sens du courant dans au moins quelques-uns des éléments (4, 5) traversés par le courant.

Fig.1

Fig.2a

Fig.2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4110107 A
- US 4036636 A
- WO 0149890 A1
- US 4060409 A
- US 6436169 B
- EP 0487032 B1
- EP 0487031 B1
- US 5765489 A
- DE 2707578 A1
- US 5479433 A